# EUROPEAN PATENT APPLICATION

(11) **EP 3 561 559 A1**
(43) Date of publication of application: **30.10.2019**
(21) Application number: 18183655.2
(22) Date of filing: 16.07.2018
(51) Int. Cl.: G02B 6/02, C03B 37/012

(54) **OPTICAL FIBER WITH A SHAPED PHOTOSENSITIVITY PROFILE FOR PRODUCING STRUCTURES WITH PHOTOINDUCED MODULATION OF REFRACTIVE INDEX, IN PARTICULAR BRAGG GRATINGS**

(30) Priority: 24.04.2018 PL 42532018
(71) Applicant: Instytut Technologii Materialów Elektronicznych, 01-919 Warszawa (PL)
(72) Inventor: Buczynski, Ryszard, 00-575 Warszawa (PL); Osuch, Tomasz, 04-895 Warszawa (PL); Anuszkiewicz, Alicja, 01-711 Warszawa (PL); Markowski, Konrad, 08-110 Siedlce (PL); Franczyk, Marcin, 00-450 Warszawa (PL); Kasztelanic, Rafal, 05-830 Nadarzyn (PL); Pysz, Dariusz, 01-493 Warszawa (PL)
(74) Representative: AOMB Polska Sp. z.o.o.

(57) **Abstract**

The invention relates to an optical fiber with shaped photosensitivity profile, comprising a nanostructured core composed of at least two types of glass rods, wherein at least one type of glass rods is doped with germanium. The invention relates also to a method for preparing an optical fiber with a core allowing for obtaining photoinduced refractive index modulation. Depending on their specific type, such optical fibers are applicable i.a. in laser generation and in amplification techniques (active optical fibers) and/or in optical fiber sensors and telecommunications applications (passive optical fibers).

## Description

### Field of the invention

The subject of the invention is an optical fiber with a shaped photosensitivity profile and a method for preparing a fiber with a core containing a structure allowing for modulation of refractive index by means of ultraviolet light. Depending on their particular type, such optical fibers are applicable i.a. in laser generation and in amplification techniques (active optical fibers) and/or in optical fiber sensors and telecommunications applications (passive optical fibers).

### Prior art

Modulation of refractive index in optical fibers is one of the basic tools for shaping the characteristics of these fibers, depending on the intended use. Periodic change in refractive index of the fiber along the direction of light propagation is realised in practice by means of periodic (or possibly quasi-periodic) structures. Depending on the period length, periodic structures can be classified into the groups of long-period gratings (periods of hundreds of micrometres) or short-period gratings (i.e. Bragg gratings) (periods of several hundreds of nanometres). In fiber Bragg gratings, the light phase-matched to the structure period is strongly backscattered, which effectively leads to selective reflection of an electromagnetic wave from the Bragg grating structure at a specific wavelength. In turn, in the transmission, the Bragg gratings constitute highly selective optical band-stop filters. Effect of strong backward reflection does not occur in long-period gratings (or is very weak), these structures, however, exhibit filtration properties in transmission as a result of coupling of cladding modes with a core (fundamental) mode and are usually used in this configuration.

In recent decades, the use of periodic structures, i.e. Bragg gratings and long-period gratings, had almost dominated the field of photonics associated with technology and use of optical fiber sensors in many areas of life, and also with optical fiber telecommunications and microwave photonics. Bragg gratings are used as sensors of physical quantities (such as temperature, deformation), mirrors of optical fiber lasers or selective optical filters, and are also used to stabilise the wavelength of laser diodes. In turn, long-period gratings operating in a transmission configuration can be used in the broadly understood optical filtration as wavelength discriminators in sensor systems, and also as sensors sensitive, among others, to environmental conditions (refractive index), or as an component flattening the amplification characteristics of erbium optical fiber amplifiers.

Fabrication of periodic structures is based on using of photo-sensitivity phenomenon in cylindrical optical fibers having a core doped with germanium oxide (IV), due to the fact that the germanium-silica glass exhibits a strong UV absorption in the range of 193 - 266 nm. In the technology for fabrication of Bragg gratings, the sources of optical radiation with a wavelength of 193, 244 and 248 nm are commonly used - this is mainly due to the availability of such lasers (ArF and KrF excimer lasers, as well as argon lasers operating in the frequency-doubling regime). Depending on the wavelength illuminating the fiber, change in refractive index occurs as a result of a one-photon (∼244 or ∼248 nm) or two-photon (∼193 nm) absorption process. For one-photon absorption, it is postulated that the most likely explanation for this mechanism is the theory of formation of colour centres in the optical fiber. In this case, it is assumed that valence connections of Ge-Ge atoms are responsible for photo-sensitivity and their occurrence is the result of structural defects of glass (i.e. local lack of oxygen atoms). Such a binding has an energy equal to 5.1 eV, and therefore close to a wavelength of ∼ 240 nm. For two-photon process, it is assumed that electrons of germanium atoms are excited from the valence energy level to the conductivity level both by the actual and the virtual energy states. [[K. O Hill, G. Meltz, "Fiber Bragg grating technology fundamentals and overview", J. Lightwave Technol. 15, 1263-1276 (1997); David N Nikogosyan "Multi-photon high-excitation-energy approach to fibre grating inscription" Meas. Sci. Technol. 18 R1-R29 (2007); M. Lancry, B. Poumellec, "UV laser processing and multiphoton absorption processes in optical telecommunication fiber materials", Physics Reports, 523, 207229 (2013)].

Due to small periods, the change in core refractive index in Bragg gratings is obtained by interference methods, methods utilising irradiation through phase masks, and also methods of point-by-point writing [among others, R. Kashyap, "Fiber Bragg Gratings", Academic Press, Amsterdam ect. (2010); I. Bennion, J. A. R. Williams, L. Zhang, K. Sugden, N. J. Doran, "UV-written in-fibre Bragg gratings, Opt Quantum Electron. 28, p. 93-135 (1996), K. O. Hill, G. Meltz, "Fiber Bragg grating technology fundamentals and overview," J. Lightw. Technol. 15 (8), 1263-1276 (1997)]. In turn, long-period gratings, due to much larger periods, are mainly prepared using the point-by-point method or using an amplitude mask.

The phase mask method is currently the most commonly used method for fabrication of optical fiber Bragg gratings, as it allows for high repeatability of spectral parameters, in particular the Bragg wavelength. It is based on lateral irradiation of a fiber with a laser beam through a diffraction element (i.e. phase mask). Phase mask parameters such as phase stage level and fill factor are selected so as to maximise the transmitted power in ± 1 diffraction orders, while minimising the energy of the zero order. Typically, values above 35% of light power in ±1 diffraction order and below 2% of light power in the zero order are considered optimal. In a space where beams from ±1 diffraction orders overlap, interference occurs, resulting in mapping of the interference pattern in the photo-sensitive core of the optical fiber. Furthermore, by modifying the technique, i.e. scanning of the phase mask with a laser beam, it is possible to precisely control the Bragg grating length.

Since fabrication of Bragg gratings working at different wavelengths (i.e. having different period values) requires the use of many phase masks, higher flexibility in the context of smooth regulation of Bragg wavelength is provided by interferometric methods. One of the most commonly used methods is the one using the Talbot interferometer [K. O Hill, G. Meltz, "Fiber Bragg grating technology fundamentals and overview", J. Lightwave Technol. 15, 1263-1276 (1997)].

In the method of point-by-point irradiation, a periodical change of refractive index is obtained by placing the fiber in the area of the laser beam focused or spatially limited in a different way, locally illuminating the fiber areas spaced apart by a predetermined distance. This method requires use of precise diaphragms and linear stages with a predetermined resolution and accuracy [A. D. Kersey, et. al., "Fiber Grating Sensors", J Lightwave Technol. 15, 1442-1463 (1997)].

Among commercially available optical fibers exhibiting fiber core photosensitivity, i.e. allowing for periodic modulation of refractive index by means of UV radiation, there are classic telecommunications fibers (e.g. SMF-28 by Corning) with a germanium content of approx. 3-4 mol %, and also fibers with an increased germanium content (up to over a dozen mol %) (e.g. GF3 of Nufern or PS1250/1500 of Fibercore). SMF-28 fibers due to the low germanium content require additional hydrogenation process in order to increase photosensitivity, and the gratings obtained show limited thermal long-period stability and must be additionally subjected to accelerated aging processes in order to stabilise spectral parameters. On the other hand, higher concentration of germanium is associated with an increase in the core refractive index, which in turn increases both the numerical aperture of the optical fiber and the cut-off wavelength of the second mode. In case of desired single-mode nature of photosensitive fibers doped with germanium in the wavelength range above 1300 nm, commercially available photosensitive optical fibers are available in two versions:
(a) with reduced core diameter, which, on the one hand, shifts the cut-off wavelength of the second mode towards short wavelengths, but makes the fiber incompatible (in terms of core diameter and modal field diameter) with classic fibers and components in a telecommunications standard; an example is SM1500 fiber of Fibercore, having a modal field diameter of approx. 4 µm for a wavelength of 1550 nm [https://www.newport.com/medias/sys_master/images/images/h63/h88/8797113188 382/Highly-Germanium-Doped-Fiber.pdf];
(b) with the core co-doped with boron (and more precisely: B₂O₃), which reduces the refractive index (compensating for the effect of doping with GeO₂), thereby ensuring compatibility of the core/modal field with SMF-28; the main disadvantage of boron doping is a significant increase in the optical fiber unit attenuation (even by two orders of magnitude relative to SMF-28 or photo-sensitive fiber without B₂O₃); an example is PS1250/1500 fiber of Fibercore, with an attenuation of 120 dB for a length of 1550 nm [https://www.newport.com/medias/sys_master/images/images/hee/h2d/87970552217 90/Boron-Doped-Photosensitive-Fiber.pdf];

A separate group of fibers, in which periodic modulation of refractive index is introduced are photonic optical fibers, having a structure of a two-dimensional photonic crystal with a central lattice defect (core). In this type of optical fibers, modification of geometrical microstructure parameters (shape, size and mutual arrangement of air holes in the cladding) allows for the shaping, in a wide range, of propagation and sensing properties of the fiber (and therefore the spectral properties of gratings written therein). This is undoubtedly a significant advantage of photonic fibers compared to classic fibers. It is worth mentioning that in case of low concentration of germanium in the network defect area serving as a core, photonic optical fibers, like the classic ones, may require an additional hydrogenation process which precedes irradiation thereof with a UV beam.

In addition to said advantages, the structure of air micro-holes in the photonic optical fiber cladding also has disadvantages. A serious problem resulting from the existence of air holes around the core is the strong scattering of UV radiation during the grating formation. This is a major obstacle in obtaining series of gratings with repetitive parameters, as well as complex periodic structures with a shaped distribution of periodic changes in the core area refractive index. Furthermore, there are problems with thermal processing of the fiber (collapsing of holes) and splicing with standard optical fibers. It is also problematic to combine photonic fibers mechanically in an immersion fluid environment due to the capillary effect.

In recent years, optical fibers with a nanostructured core had been developed [R. Buczyński, M. Klimczak, T. Stefaniuk, R. Kasztelanic, B. Siwicki, G. St 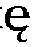 pniewski, J. Cimek, D. Pysz, and. St 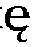 pień, "Optical fibers with gradient index nanostructured core," Opt. Express 23, 25588-25596 (2015)]. In contrast to known photonic fibers, in this case the modification of propagation properties is carried out by shaping the distribution of core refractive index. This is accomplished by preparing a preform in form of suitably arranged two types of glass rods differing in the refraction index. After drawing the fiber, the core refractive index profile results from the way the rods were arranged, and the optical fiber itself, in its cross-section, is a solid fiber (without holes).

A specific variant of this technology is described in Polish patent application P.419944, disclosing a method for preparing an active optical fiber, the core of which consists of at least two types of glass rods, wherein at least one type of rod comprises at least one active dopant (a rare earth element), enabling generation of laser radiation. The control of dopant transverse distribution in form of a designed and thinned structure of doped and non-doped glass rods allows for limitation of the dopant clustering phenomenon, which in turn increases the radiation absorption efficiency of the pump. Owing to using numerous rods, any inhomogeneities are averaged and the spread of parameters along the final fiber is decreased. Furthermore, depending on the specific design of individual types of rods in the core, it is possible to shape the refractive index profile depending on the specific needs, in particular a gradient profile, a step profile or a discontinuous profile.

### Summary of the invention

The aim of the invention was to overcome the above-mentioned problems associated with the use of known solutions regarding the fabrication of periodic structures in optical fibers, by developing an optical fiber with the possibility of shaping the photosensitivity profile and propagation properties, and in particular allowing more effective modulation of the refractive index with UV light than in the case of commonly used photosensitive fibers.

Using the concept of core nanostructuring, the inventors of the present solution developed passive fibers with independent profiling of the photo-sensitivity distribution and independent profiling of the refractive index distribution affecting propagation properties of the optical fiber, as a result of using glass rods of at least three types, wherein the above being dependent when only two types of rods are used. In turn, in the case of an active fiber, the use of the concept of core nanostructuring by separating the photosensitive and active areas of the core in the nano-scale in the same volume (and thus obtaining the same core area exhibiting photosensitivity and activity at the same time) allowed a significant reduction in the unfavourable phenomenon of clustering of active dopant ions (e.g. erbium) with base glass ions and doped glass ions, resulting in decrease in the efficiency of radiation generation in the fiber. The use of photosensitive and active areas in the same volume allows obtaining a laser fiber with Bragg gratings acting as mirrors in a laser resonance cavity. Currently, in order to obtain a laser cavity in all-fiber systems, Bragg gratings applied on separate photosensitive but inactive optical fibers are added to the active fiber. Another method is to use a fiber with a photosensitive cladding and an active core to write a BG grating, but in this case the overlapping of the modal field with the area where the grating (inner cladding) is formed, is small, leading to deterioration of the resonance cavity efficiency [L. Dong, W. H. Loh, J. E. Caplen, J. D. Minelly, K. Hsu, and L. Reekie, "Efficient single-frequency fiber lasers with novel photosensitive Er/Yb optical fibers," Opt. Lett. 22, 694-696 (1997)].

The subject of the invention is an optical fiber with a shaped photosensitivity profile, adapted to guide and generate radiation with a wavelength λ and to induce refractive index modulation. This optical fiber is provided with a cladding and a nanostructured core composed of longitudinal glass elements oriented along the optical fiber and forming a compact bundle, wherein transverse dimensions of the longitudinal elements are smaller than the wavelength λ, and the core is composed of at least two types of longitudinal elements differing in the refractive index. Longitudinal elements of the first type are made of GeO₂-doped silica glass, and longitudinal elements of the second type are made of pure silica.

The optical fibers according to the invention show all the advantages of nanostructured fibers, among others and above all, they ensure the possibility of obtaining an arbitrary distribution of refractive index by allowing to design the core structure from glass rods with different refractive indices, and by averaging heterogeneities. Furthermore, the use of one type of GeO₂-doped glass rods allows for independent profiling of the photosensitivity distribution, while the use of the second type of rods (of a different glass type, i.e. having a refractive index different from that of the first type rods) allows for independent profiling of refractive index distribution affecting the optical fiber propagation properties. It should be emphasised that nanostructuring provides the opportunity to select the material composition of the core (in a spatial sense) by using rods with any dopants shaping the refractive index distribution in the core and, in case of GeO₂-doping, shaping photosensitivity, which results in the same core area at the same time having a predetermined refractive index profile and a predetermined photosensitivity profile.

One particular advantage of the optical fibers according to the invention is providing the possibility to increase the photo-sensitivity compared to a standard SMF-28 fiber, while effectively maintaining the same level of GeO₂-doping and maintaining full compatibility with SMF-28 in relation to the modal field diameter. In consequence obtained fiber is compatible with SMF-28- and has increased photo-sensitivity, resulting in a more efficient photoinduction of refractive index changes, which is manifested for example by a possibility of obtaining a grating with a predetermined refractive index providing a smaller dose of UV radiation than in case of fibers with a lower photosensitivity level. Another consequence of the optical fiber structure according to the invention is obtaining full compatibility (with respect to a modal field diameter) with standard SMF-28 fiber without the need to co-dope with boron (as it is in commercial photosensitive fibers, e.g. PS1250/1500 of Fibercore). Boron, or more precisely B₂O₃, is used in prior art solutions to compensate for the increase of the core refractive index caused by GeO₂ dopant in order to change the modal field of the photosensitive optical fiber so as to make it compatible with a standard telecommunications optical fiber such as SMF-28. B₂O₃ dopant increases attenuation (adverse in view of transmission) and reduces the fiber temperature sensitivity (adverse in view of temperature sensor application). Elimination of the need for co-doping with boron in case of optical fibers according to the invention, while maintaining the compatibility with SMF-28 fibers with respect to modal field diameter allows to avoid these adverse phenomena.

Another advantage of the optical fibers according to the invention is the possibility of obtaining a photosensitive optical fiber compatible with SMF-28 and having a reduced cut-off wavelength of the second mode, which ensures single-mode operation of the fibers in a wider spectral range (extended from the short wave side). This is preferable, for example, in optical fibers' applications as media for obtain laser action (that is active fibers) in the fundamental mode.

Another advantage of the optical fibers according to the invention is providing the possibility of shaping the GeO₂-dopant spatial distribution in order to modify the effectiveness of interaction of individual modes with the structure of the prepared grating. This allows to obtain a structure with photoinduced refractive index change (e.g. Bragg grating), which will stronger interact with a higher-order mode than with the fundamental mode, or vice versa (depending on the distribution of the GeO₂-dopant concentration).

Furthermore, the optical fibers according to the invention provide the possibility of shaping mutual relations between the propagation constants of multi-mode optical fiber modes by shaping the profile of the core refractive index. More specifically, this means the possibility to shape, in the fiber with the formed grating, mutual relations of the reflection wavelengths for individual modes of the multi-mode optical fiber. Asymmetrical distribution of GeO₂-dopant allows for selective enhancement of reflection efficiency for the selected mode, and therefore with the concentration of GeO₂-dopant in the middle of the core, the grating strongly reflects the fundamental mode, whereas if the germanium dopant is concentrated in the core periphery, the grating strongly interacts with a higher mode, provided that the distribution of other rods provides a refractive index profile suitable for guiding the fundamental Gaussian mode or another one of similar characteristics.

It should be emphasized that in comparison to photonic optical fibers, in the fibers with a nanostructured core, there are no air holes which scatter UV radiation during formation of periodic structures and hinder thermal processing of the fiber. Nevertheless, due to appropriate profiling of the nanostructured core in the optical fibers according to the invention, it is possible to shape propagation properties (such as in particular dispersion, effective modal field, propagation constant, birefringence, modality, cut-off wavelength of the second mode, numerical aperture) just as in photonic optical fibers. The optical fibers according to the invention combine the advantages of classic and photonic fibers, and at the same time are free of some disadvantages of these known fibers.

If the longitudinal elements do not contain any active dopant, the optical fiber according to the invention is a passive optical fiber, and the fiber is formed of rods of the first type and the second type. However, in one of the preferred embodiments of the optical fibers according to the invention, there are longitudinal elements of third type, which are made of glass containing at least one active dopant (third type rods) and thus the obtained optical fiber is an active fiber. Preferably, the active dopant is selected from erbium, praseodymium, ytterbium, neodymium, thulium, holmium and others.

The main advantage of the active fibers according to the invention is the possibility of obtaining a core showing high photo-sensitivity (resulting from GeO₂ dopant) and activity (resulting from a rare earth element dopant) in the same volume, due to alternated arrangement of the longitudinal elements of the first and third types. In the wavelength scale λ of radiation guided and generated in the optical fiber, the core material shows averaged properties and owing to this, it can, at the same time, be active, photosensitive and show a specific effective profile/distribution of the refractive index.

As mentioned above, the core contains the longitudinal elements of the second type made of pure silica, and thus having the refractive index different from the refractive index of the longitudinal elements of the first and third types. Separating the first type longitudinal elements (photosensitive) from the third type longitudinal elements (active) by the longitudinal elements of pure silica (the second type) in form of rods or capillaries allows for complete elimination of ion clustering phenomenon. Furthermore, both for the active and passive fibers, the use of the second type longitudinal elements of glass containing no active dopant allows for using a wider range of refractive index values in the core.

In another preferred embodiment of the optical fiber according to the invention, the refractive index of the longitudinal elements of one type has a value lower than or equal to the lowest value of the refractive index characteristics in the core cross-section, and the refractive index of the longitudinal elements of another type has a value higher than or equal to the highest value of the refractive index characteristics in the core cross-section. Due to such solution, the arbitrary distribution of the refractive index can be obtained using only two types of glass (in case of passive fibers) or three types (in case of active fibers).

In yet another preferred embodiment, the active optical fiber according to the invention has a photonic cladding, for example in form of a single ring of holes.

In a further preferred embodiment, the optical fiber according to the invention is a birefringent fiber, whereby birefringence is obtainable in two ways: by the core material anisotropy or by geometrical anisotropy of the core and/or the cladding (no axial symmetry in the core and/or the cladding).

Preferably, the transverse dimensions of the longitudinal elements are smaller than the wavelength λ. Due to such small transverse dimensions of the core elements, they are not distinguished by the light wave and no light propagation occurs in form of a mode in a single element, which is desirable in case of single-mode optical fibers.

Preferably, on the longitudinal elements of the first type, a structure having photoinduced refractive index modulation is formed, which is in particular selected from the group consisting of a Bragg grating and a long-period grating. The ability to write the grating results directly from the use of photosensitive longitudinal elements of the first type (GeO₂-doped).

Preferably, the optical fiber is a multi-mode fiber. Core nanostructuring allows for shaping modal characteristics of the optical fiber (distribution of the effective refractive index), including the number of modes, the modal field distribution and the propagation constant values for individual modes.

The subject of the invention is also a method for preparing an optical fiber with a core adapted for forming a structure with photoinduced refractive index modulation. In this method, an UV laser beam irradiates the optical fiber adapted to guide and generate radiation with a wavelength λ and which is provided with a cladding and a nanostructured core composed of longitudinal glass elements oriented along the optical fiber and forming a compact bundle, and wherein transverse dimensions of the longitudinal elements are smaller than the wavelength λ, and the core is composed of at least two types of longitudinal elements differing in their refractive index, whereby the longitudinal elements of the first type are made of GeO₂-doped glass. Preferably, the irradiation with an UV laser beam is carried out by an interferometric method, a phase mask method, a point-by-point writing method, or an amplitude mask method.

Undeniable advantages of the method according to the invention include, above all, the possibility of using existing devices to obtain structures with photoinduced modulation of refractive index in optical fibers with a shaped photosensitivity profile due to the presence of a GeO₂ dopant in one of the types of longitudinal elements that are part of the nanostructured core. As in the longitudinal elements of the second and third type (that is containing no GeO₂ dopant) photoinduced modulation of refractive index does not occur, an appropriate arrangement of photosensitive longitudinal elements allows for shaping of the desired target characteristics of the core refractive index, regardless of the impact on other propagation properties or activity resulting from the presence and distribution of other types of longitudinal elements. In the method according to the invention it is possible to use an UV laser of either continuous or pulsed operation, depending on the specific requirements and desired parameters of the final optical fiber.

Due to the use of optical fibers with a shaped photosensitivity profile according to the invention, the efficiency of the grating writing/generation is increased, which means that a smaller dose of UV radiation is needed to obtain a grating with a predetermined refractive index. This is related to shaping of core photosensitivity profile by nanostructuring.

The invention will be presented now in greater detail in preferred embodiments, with reference to the accompanying drawing, in which:
Fig. 1 shows a cross-sectional structure of the optical fiber core according to the invention, with a parabolic distribution of the refractive index in the core;
Figs. 2a-f show a cross-sectional structure of a preform and a subpreform of the optical fiber of Fig. 1;
Figs. 3a-b show an image from a scanning electron microscope (SEM) of the optical fiber cross-section of Fig. 1;
Figs. 4a-e show the results of measurements of the second mode cut-off wavelength and attenuation for the exemplary optical fibers according to the invention;
Figs. 5a-b show the measured and calculated characteristics of dispersion D for optical fibers of an exemplary optical fiber according to the invention and change of the dispersion difference as a function of experimentally determined ZDW;
Fig. 6 shows a diagram of a measurement system for characterising Bragg gratings formed in an exemplary optical fiber according to the invention;
Fig. 7 shows a transmission spectrum of a Bragg grating with λ_{B} = 1061.5 nm, formed in an exemplary optical fiber according to the invention;
Fig. 8 shows a transmission spectrum of Bragg gratings with λ_{B} close to the third transmission window (1550 nm), formed in an exemplary optical fiber according to the invention;
Figs. 9a-b show a temperature-dependent shift of the Bragg wavelength for an exemplary optical fiber according to the invention;
Figs. 10a-b show a temperature-dependent shift of the Bragg wavelength for an exemplary optical fiber according to the invention;
Fig. 11 shows an energy density-dependent photoinduced refractive index modulation for an exemplary optical fiber with a step profile of the refractive index according to the invention;
Fig. 12 shows a photo-induced refractive index modulation dependent on the distribution of GeO₂-doped rods for the same power density;
Fig. 13 shows the efficiency of the refractive index modulation dependent on the distribution of GeO₂-doped rods as a function of power density.

### Detailed description of the preferred embodiment

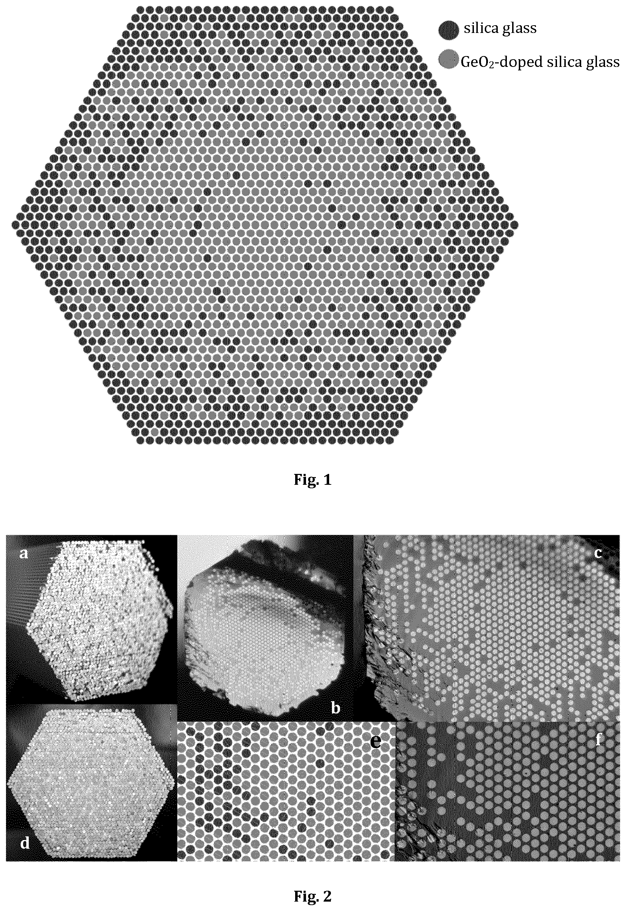

Exemplary nGRIN (nano-structured Graded-Index) optical fiber according to the invention, the cross-section of which is shown in Fig. 1, was obtained as follows:

### Fiber preparation

Pure silica glass (Ohara SK1310) was formed into glass rods with a diameter of 0.45 mm. A step-index preform doped with GeO₂ (Optacore), with a concentration of 8.5 mol % was also drawn to obtain glass rods having the same diameter. Next, a structured preform was stacked from glass rods layer by layer according to the pattern shown in Fig. 1. A total of 2107 glass rods were used, with 53 rods on the diagonal. The preform was thermally integrated and drawn to form subpreforms with a diameter of 1 to 3 mm. The subpreform was then placed inside a glass tube (made of pure silica glass from Heraeus), and the free space was filled with glass rods of the same type in order to obtain the desired size of the cladding of the final fibers in the range from 100 to 136 µm. All drawing processes were carried out using a tower for drawing optical fibers, typically used for the preparation of silica glass fibers. Fiber #2 was additionally protected with a polymer coating to improve mechanical properties, which allowed to measure the cut-off wavelength of the second mode by bending method.

Table 1 below shows properties of types of glass and glass preforms used to prepare optical fibers.

**Table 1**

| Parameter | Type of glass | | |
|---|---|---|---|
| | low refractive index | high refractive index (preform having a step profile) | |
| | | core | cladding |
| | SK1310 | F300 doped with Ge | F300 |
| refractive index, *ne* | 1.4609 | 1.47207 | 1.46007 |
| initial diameter [mm] | 10 | 18.4 | 24 |
| GeO₂ concentration [mol %] | 0 | 8.5 | 0 |
| final rod diameter [mm] | 0.45 | 0.45 | |
| effective GeO₂ concentration [% mol] | 0 | 4.9* | |
| effective refractive index *ne* | 1.4609 | 1.4678 | |

| | | | |
|---|---|---|---|
| * Due to the diffusion effect and to averaging the germanium concentration in the whole rod from the preform having a step profile of refractive index, the effective GeO₂ concentration in doped rods is 4.9 mol%. | | | |

In Fig. 2 a cross-section is shown of a complex structural preform and a subpreform of nGRIN element made of rods of pure silica glass and germanium-doped glass. The structural preform is shown in perspective view (Fig. 2a) and in front view front (Fig. 2d). In the preform view of Fig. 2b each glass rod with a diameter of 0.45 mm can be distinguished. Fig. 2c shows a cross-section of the drawn subpreform with a diameter of 1.5 mm. Figs. 2c and 2f show a cross-section of the subpreform in an enlarged view. Dark areas correspond to the non-doped silica, and bright ones - to the core rods with a high dopant content (8.5 mol % of GeO₂), formed of base preform with a step profile of the refractive index. A mosaic pattern designed for the fiber, shown in Fig. 2e was very well preserved in the actual structure of the drawn subpreform shown in Fig. 2f. Diameter of individual rods in the subpreform with a diagonal of 1.5 mm is about 28 µm.

Table 2 below shows geometrical parameters of the prepared fibers.

**Table 2**

| Fiber | m [µm] | M [µm] | η | φ [µm] |
|---|---|---|---|---|
| #1 | 6.51 | 7.82 | 1.20 | 100.2 |
| #2 | 7.15 | 7.72 | 1.08 | 135.8 |
| #3 | 7.44 | 7.88 | 1.06 | 103.7 |
| #4 | 7.88 | 9.85 | 1.25 | 125.7 |
| #5 | 8.41 | 9.72 | 1.16 | 124.4 |

Diameter of the cladding was marked as φ. Cores of the prepared fibers were dimensioned using the major axis (M) and the minor axis (m) of the ellipse and ellipticity (η) just like in case of elliptical core fibers. Fibers #2 and #3 have cores most similar in shape to a circle, resulting in the smallest ellipticity. Fibers #1, #4 and #5 became elliptical during drawing, which may result in residual birefringence of fibers. Ellipticity of the prepared fibers does not exceed 1.25, thus, the birefringence is very small and therefore negligible.

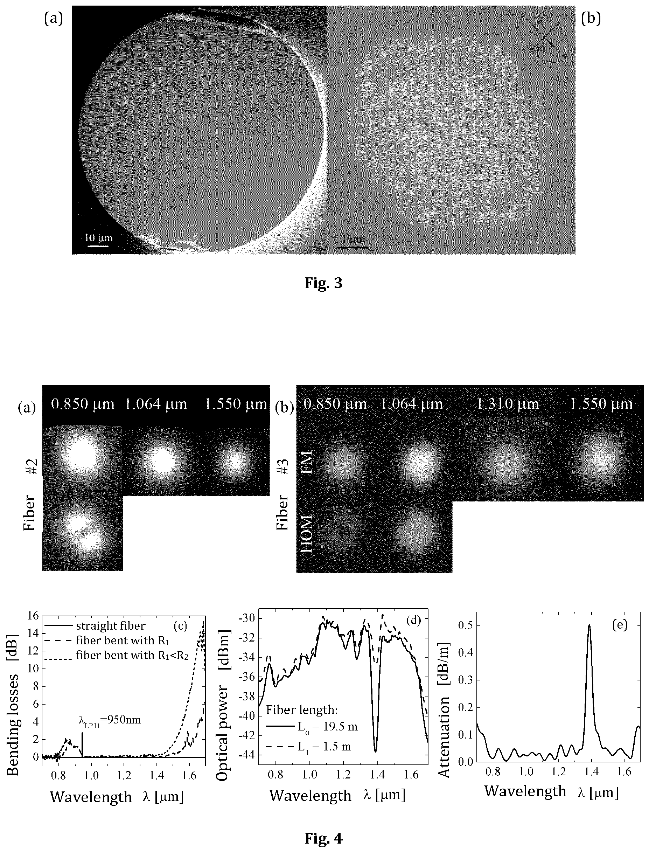

Figs. 3 a and b show a SEM image of cross-section of fiber #4 with a core radius of approximately 4 µm and a cladding diameter of 125.7 µm. Diameters of individual rods in the core of this fiber are about 190 nm. Dark areas in Fig. 3b correspond to pure silica glass, and bright areas correspond to Ge-doped silica glass rods.

### Characterisation of nGRIN fibers

In the first step, a modal analysis was carried out by observing the modal field distribution. The fiber #2 is at least two-mode for a wavelength of 0.85 µm, but it is single-mode from at least 1.064 µm. The optical fiber #3 for up to 1.064 µm is still two-mode, and single-mode from at least 1.310 µm (Fig. 4 (a-b)). This method is not critical for estimating the cut-off wavelength (λ_{cut-off}). Consequently, the λ_{cut-off} value is contained between these wavelengths. Therefore, an additional measurement was carried out for the fiber #2. Higher order modes (HOM) were filtered from the output spectrum by bending (the fiber was protected by a polymer coating). Losses generated in the bent fiber are indicated in Fig. 4c. Initially, the straight fiber (continuous series) was bent with a radius R₁ ∼ 2 cm (dashed series) and with a smaller radius R₂ ∼ 1 cm (dotted series). The long-wave side of the attenuation peak located near the smaller wavelengths corresponded to the cut-off wavelength for mode LP₁₁ and was λ_{LP11} = 0.95 µm. As in case of a silica fiber having a step change of refractive index, such as e.g. SMF-28, bent with such a small radius (∼ 1 cm), the bending negatively affects also the fundamental mode (FM), what can be observed for the long-wave edge of the examined spectral range, where losses increase very quickly. Transmission for straight and bent fibers was measured using a broadband (600 - 1700 nm) optical spectrum analyser. In the next step, numerical aperture NA was determined for a wavelength of 1.55 µm by means of a standard method and for all fibers it is 0.11 ± 0.01.

Fig. 4 illustrates measurements of cut-off wavelength and attenuation. The intensity distribution of modes for all fibers was recorded using two CCD cameras: with a silicon sensor and with an additional phosphorus layer for testing the near-infrared mode at 1.55 µm. Figs. 4a-b show modal field distribution recorded with a CCD camera at different wavelengths and for different coupling conditions, for the fibers #2 and #3, respectively. Fig. 4c shows characteristics of losses due to bending, showing cut-off wavelength for mode LP₁₁ in the fiber #2. Fig. 4d shows optical power at the output of long (continuous series) and short (dashed series) sections of the fiber #3, and Fig. 4e shows attenuation in a wide spectral range, calculated basing on Fig. 4d.

Attenuation was measured using a typical cut-off method and, in the considered spectral range from 0.7 to 1.7 µm, it was at the same level of 0.05 dB/m for all fibers. Attenuation is higher only at the characteristic peak of absorption on OH ions, located at a wavelength of approximately 1.4 µm, where its value is 0.5 dB/m (see Fig. 4e). The resulting attenuation is low, taking into account the laboratory conditions for fiber drawing and the standard quality of the glass rods used to prepare the fibers. It also shows that the assembling procedure introduced no serious impurities into the fiber.

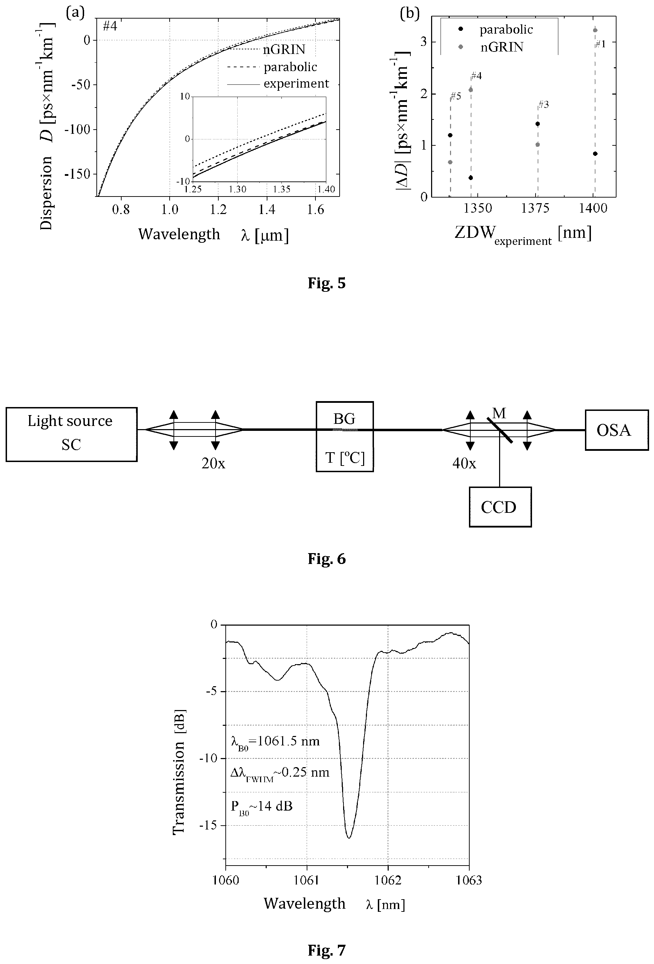

Dispersion D of the prepared fibers was also examined. Measurements were carried out using a Mach-Zehnder interferometer with full compensation of optical elements in both arms. Numerical analysis of the dispersion of the prepared fibers was also carried out. The structures were implemented into the numerical model with the assumption of subpreform pattern (Fig. 2b) and the core size of the final fibers (Table 2). Simulations were also carried out for exemplary fibers with a parabolic distribution of refractive index and with a hexagonal core shape having a core diagonal corresponding to the average core size of the actual fibers. Ellipticity of the cores was neglected. The measured and calculated dispersion characteristics are shown by way of example for one optical fiber #4 in Fig. 5a. From the experimental curves measured for most fibers, the wavelength, for which the dispersion has a value zero, was determined (ZDW, zero dispersion wavelength) and the values of numerically estimated dispersion functions were calculated at these wavelengths. The differences are shown in Fig. 5b for the optical fibers #1, #3, #4 and #5.

Parameters D calculated for the actual structures are indicated by the dotted series named "nGRIN" in Fig. 5a. The experimental results are marked as continuous series. Parabolic distributions (dashed series) were also calculated with the assumption of averaged size of cores for each fiber, respectively. Nanostructuring with an arbitrary, parabolic distribution of refractive index with an inclusion size of λ/3 leads to a refractive index distribution very similar to the parabolic shape, which was confirmed numerically for the examined fibers. Experimental results allow to verify whether the dispersion shape is consistent with the numerical simulations' results. Small discrepancies in the dispersion parameter D, not exceeding ± 3.5 ps x nm⁻¹ km⁻¹, can be attributed to measurement uncertainty (Fig. 5b). The values of ΔD correspond to a mismatch between the measured and the calculated zero-dispersion wavelengths. If differences in dispersion between experimental and ideal (parabolic) distribution are taken into account, the value of ΔD is lower than ± 1.5 ps x nm⁻¹ km⁻¹. To sum up, the dispersion characteristics obtained experimentally is consistent with the expected one. It confirms that the drawing process is well-controlled and the method allows for preparation of fibers having predictable parameters.

Table 3 below shows a comparison of parameters of the optical fiber according to the invention (with nano-structured core nGRIN) and of the typical telecommunications optical fiber SMF-28.

**Table 3**

| Parameter | nGRIN | SMF-28 |
|---|---|---|
| Refractive index profile | Gradient: parabolic | step |
| Core diameter [µm] | 7.6 (averaged) | 8.2 |
| Cladding diameter [µm] | 125 | 125 |
| Numerical aperture NA | 0.11 | 0.14 |
| Modal field diameter at 1550 nm [µm] | 9.8 | 10.4 |
| Cut-off wavelength [nm] | ≤1100 | 1260 |
| ZDW [nm] | 1325÷1347 | 1304÷1324 |
| Attenuation at 1550 nm [dB/m] | ≤0.05 | ≤0.00018 |

As it can be seen from the data shown in the table above, the parameters are mostly comparable. The nGRIN fiber shows the largest discrepancy (two orders worse) for attenuation, which should be attributed to laboratory conditions for preparation and to the lower purity of materials used, compared to the commercial fiber SMF-28. The examined nGRIN optical fiber has a slightly smaller core (but may have exactly the same as SMF), which proportionally results in a slightly longer wavelength at which zero dispersion (ZDW) occurs. The main difference between nGRIN fiber and SMF-28 fiber is the gradient-parabolic profile of refractive index and significant reduction of cut-off wavelength values, which are attributed to the possibility of profiling modal characteristics of the optical fiber by nanostructuring. Due to the lower cut-off wavelength value, the optical fiber is single-mode for a wider wavelength range.

### Bragg grating characterisation

In a fiber with a nanostructured core (the fiber #4 having geometrical parameters provided in Table 2 above), a Bragg grating was fabricated using the phase mask method, and its properties were subsequently characterised.

### (a) Measuring system for characterising the Bragg grating

The fiber with the inscribed Bragg grating (BG) was placed in the measuring system shown in Fig. 6. Light from a broadband supercontinuum source (SC) was introduced into the fiber through a 20x magnification microscope lens and let out through a 40x magnification microscope lens. A mirror (M) allowed to measure the modal field distribution on a CCD camera. After removing it, light intensity at the output of the optical fiber was measured. For this purpose, the light was focused on the input of a single-mode optical fiber cable connected to an optical spectrum analyser (OSA). In order to characterise Bragg gratings in terms of temperature sensitivity, the fiber with a centrally located BG grating was placed on the Peltier module in order to implement a controlled temperature change in the range of 13.5°C to 100°C, and the Bragg peak shift in the transmission spectrum recorded on the optical spectrum analyser was monitored.

### (b) Transmission spectrum of the Bragg grating

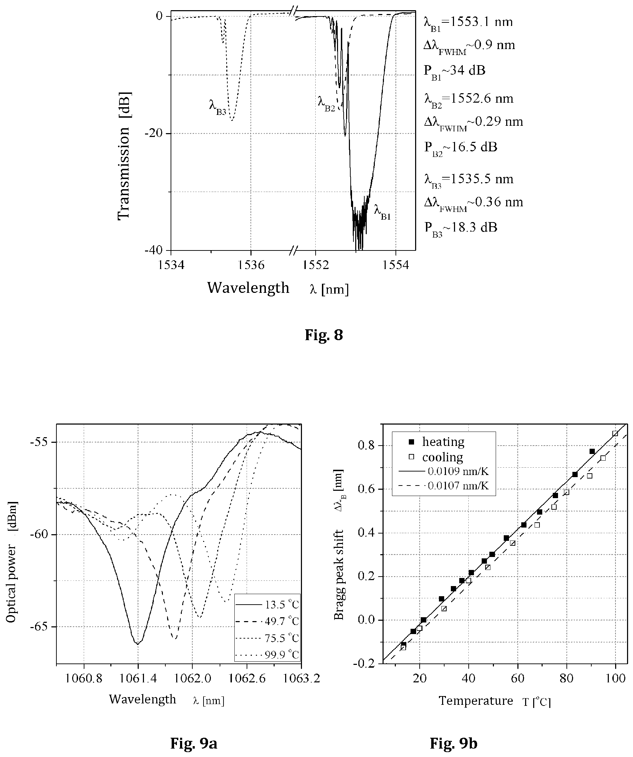

The spectral transmission characteristics were measured for all the fabricated Bragg gratings. As shown in Fig. 7 and 8, each of the four fabricated Bragg gratings showed a central wavelength of the Bragg peak at λ_{B0} = 1061.5 nm, λ_{B1} = 1553.1 nm, λ_{B2} = 1552,6 nm and λ_{B3} = 1535,5 nm, respectively. Spectral width values Δλ_{FWHM} varied in the range of 250 to 900 pm, and the transmission minimum P_{B} corresponding to the Bragg wavelength varied in the range of 14 to 34 dB.

### (c) Temperature-dependent shift of the Bragg wavelength for BG at λ_{B}=1061.5 nm

Fig. 9 shows Bragg peaks recorded for a heated fiber, whereby Fig. 9a shows the peak shift in the transmission spectrum, and Fig. 9b shows central wavelength shift estimated for the heated and cooled fiber. Temperature sensitivity of the grating is dλ_{B0}/dT=10.8±0.1 pm/K or after normalising to the wavelength 10.2 K⁻¹. As the temperature rose the Bragg peak shifted towards longer waves.

### (d) Temperature-dependent shift of the Bragg wavelength for BG at λ_{B2}=1552.6 nm

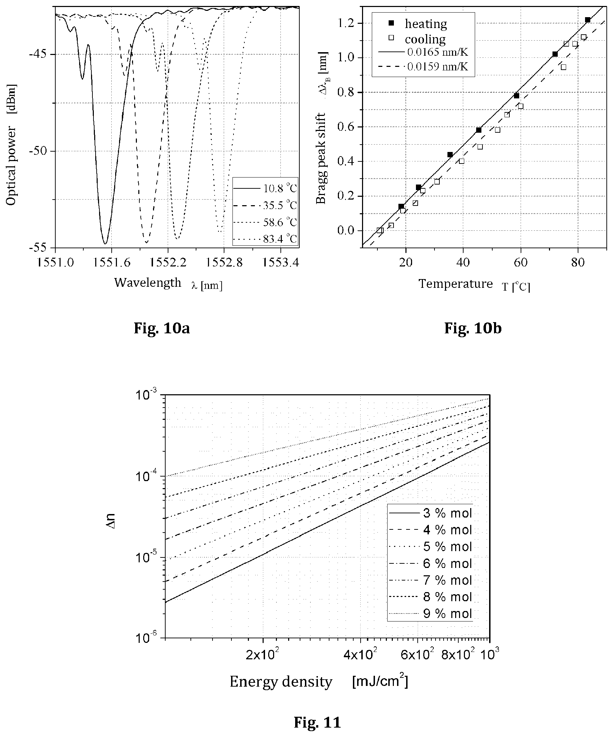

Fig. 10 shows Bragg peaks recorded for the heated fiber, whereby Fig. 10a shows the peak shift in the transmission spectrum, and Fig. 10b shows central wavelength shift estimated for the heated and cooled fiber. Temperature sensitivity of the grating is dλ_{B0}/dT=16.2±0.3 pm/K or after normalising to the wavelength 10.4 K⁻¹. As the temperature rose the Bragg peak shifted towards longer waves.

### Efficiency of the refractive index modulation dependent on the dopant distribution in an optical fiber with an effective step change of the refractive index

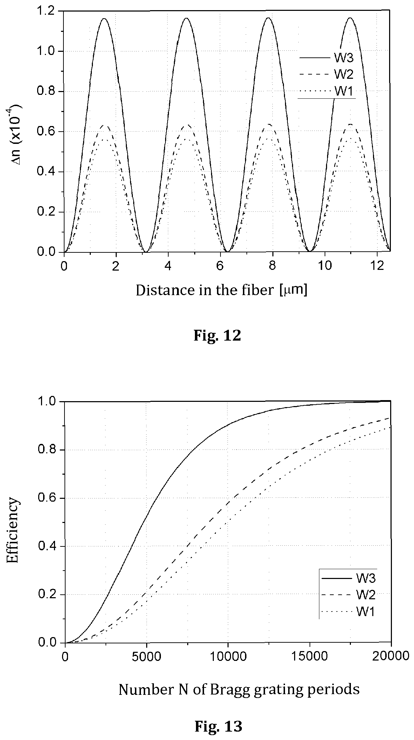

Three optical fibers were considered, i.e. three distributions of GeO₂-doped rods and non-doped rods in the optical fiber core with an effective step profile of the refraction index. In W1 fiber, GeO₂ dopant is evenly distributed across the entire core cross-section in the form of 100% packing of rods with a germanium concentration of 3 mol %. For W2 fiber, 38% of rods in the entire core cross-section were replaced with pure silica rods, and the remaining 62% of rods were replaced with rods with a higher dopant concentration of 4.9 mol %. In case of W3 fiber, 64% of the core cross-section is composed of pure silica rods, and 36% of rods having an increased germanium concentration of 8.5 mol %. All fibers have the same average germanium concentration in the core of 3 mol % and all have a step profile of refractive index for the transmitted light, with a maximum value corresponding to germanium-doped silica in an amount of 3 mol %. In publication of J. Albert, B. Malo, K. O. Hill, F. Bilodeau, D. C. Johnson, and S. Theriault, "Comparison of one-photon and two-photon effects in the photosensitivity of germanium-doped silica optical fibers exposed to intense ArF excimer laser pulses," [Appl. Phys. Lett 67, 3529 (1995)], it was shown that photoinduced efficiency of refractive index modulation in a time unit is dependent on the germanium concentration in the optical fiber core and on the laser energy density. Fig. 11 shows calculated characteristics showing the efficiency of refractive index modulation as a function of laser beam energy density for step-index optical fibers with a dopant concentration ranging from 3 to 9 mol %, according to the above-mentioned article. It has been also shown that refractive index modulation along the fiber is obtained in the three types of optical fibers discussed above, Fig. 12 for the same power density. It can be seen that for the W1 fiber which is identical to a typical telecommunication fiber in terms of core doping level and refractive index profile, this modulation is the smallest, whereas for the passive photo-sensitive fibers according to the invention the modulation is higher and increases non-linearly with increasing dopant concentration. It has been also shown how in these three types of optical fibers the efficiency of refractive index modulation depends on the number of Bragg grating periods, fig. 13. Thus, the core nanostructuring allows profiling of fiber photosensitivity while maintaining the same propagation properties.

## Claims

1. An optical fiber with a shaped photosensitivity profile, adapted to guide and generate radiation with a wavelength λ and to induce refractive index modulation, said fiber being provided with a cladding and a nanostructured core composed of longitudinal glass elements oriented along the fiber and forming a compact bundle, wherein transverse dimensions of the longitudinal elements are smaller than the wavelength λ, and the core is composed of at least two types of longitudinal elements differing in refractive index, **characterised in that** the longitudinal elements of the first type are made of GeO₂-doped silica glass, and the longitudinal elements of the second type are made of pure silica.

2. The optical fiber according to claim 1, **characterised in that** the longitudinal elements of the third type are made of glass containing at least one active dopant.

3. The optical fiber according to claim 2, **characterised in that** the active dopant is selected from erbium, praseodymium, ytterbium, neodymium, thulium, holmium and others.

4. The optical fiber according to any one of claims 1-3, **characterised in that** the refractive index of the longitudinal elements of one type has a value lower than or equal to the lowest value of the refractive index characteristics in the core cross-section, and the refractive index of the longitudinal elements of another type has a value higher than or equal to the highest value of the refractive index characteristics in the core cross-section.

5. The optical fiber according to any one of claims 2-4, **characterised in that** it has a photonic cladding.

6. The optical fiber according to any one of claims 1-5, **characterised in that** it is a birefringent optical fiber.

7. The optical fiber according to any one of claims 1-6, **characterised in that** the transverse dimensions of the longitudinal elements are smaller than 1/3 of the wavelength λ.

8. The optical fiber according to any one of claims 1-7, **characterised in that** a structure with photoinduced modulation of refractive index is applied onto the longitudinal elements of the first type.

9. The optical fiber according to claim 8, **characterised in that** the structure with photoinduced modulation of refractive index is selected from the group comprising a Bragg grating and a long-period grating.

10. The optical fiber according to claim 8 or 9, **characterised in that** it is a multi-mode fiber.

11. A method for preparing an optical fiber with a core adapted for forming a structure with photoinduced refractive index modulation, **characterised in that** an UV laser beam is used to irradiate an optical fiber adapted to guide and generate radiation with a wavelength λ, the optical fiber being provided with a cladding and a nanostructured core composed of longitudinal glass elements oriented along the optical fiber and forming a compact bundle, wherein transverse dimensions of the longitudinal elements are smaller than the wavelength λ, and the core is composed of at least two types of longitudinal elements differing in their refractive index, whereby the longitudinal elements of the first type are made of GeO₂-doped glass.

12. The method according to claim 11, **characterised in that** irradiation of the optical fiber by an UV laser beam is carried out by an interferometric method, a phase mask method, a point-by-point writing method, or an amplitude mask method.
